## Europäisches Patentamt
## European Patent Office
## Office européen des brevets

(19)

(11) Veröffentlichungsnummer: **0 026 911**
B1

(12)

# EUROPÄISCHE PATENTSCHRIFT

(45) Veröffentlichungstag der Patentschrift:
09.05.84

(51) Int. Cl.³: **B 29 D 7/24**, C 08 J 5/18

(21) Anmeldenummer: 80105913.0

(22) Anmeldetag: 30.09.80

(54) Biaxial gestreckte Polypropylenfolie mit Vorzugsorientierung und Verfahren zu deren Herstellung.

(30) Priorität: 05.10.79 JP 127854/79

(43) Veröffentlichungstag der Anmeldung:
15.04.81 Patentblatt 81/15

(45) Bekanntmachung des Hinweises auf die Patenterteilung:
09.05.84 Patentblatt 84/19

(84) Benannte Vertragsstaaten:
DE FR GB IT

(56) Entgegenhaltungen:
CH - A - 371 587
DE - A - 1 504 023
DE - A - 1 504 523
DE - A - 1 504 608
DE - A - 1 504 697
DE - A - 2 041 913
DE - B - 1 252 894
GB - A - 917 903

(73) Patentinhaber: TORAY INDUSTRIES, INC., 2, Nihonbashi Muromachi 2-chome Chuo-ku, Tokyo 103 (JP)

(72) Erfinder: Yoshii, Toshiya, 2-6-19 Seiran, Otsu (JP)
Erfinder: Tsunashima, Kenjii,
1-22 Daigokamihayamacho, Fushimi-ku Kyoto (JP)
Erfinder: Sumiya, Takashi, 43-1 Shogoinrengezocho, Sakyo-ku Kyoto (JP)

(74) Vertreter: Wettlauffer, Willy, Dr. et al, Kalle Niederlassung der Hoechst AG Rheingaustrasse 190 Postfach 3540, D-6200 Wiesbaden 1 (DE)

ACTORUM AG

## Beschreibung

Die vorliegende Erfindung betrifft eine biaxial gestreckte Polypropylenfolie, die einer Nachlängsverstreckung unterworfen wurde und die verbesserte Zugfestigkeiten in Längs- und Querrichtung aufweist. Sie betrifft auch ein Verfahren zur Herstellung der Folie.

Es ist bekannt, Folien mit einer Vorzugsorientierung durch Nachstrecken von biaxial orientierten Polypropylenfolien (im folgenden kurz OPP-Folien genannt) in Längsrichtung herzustellen. Geeignete Verfahren werden u.a. in den japanischen Patentschriften 41-21 790, 45-37 879 und 49-18 628 beschrieben. Doch besitzen diese Folien noch nicht in beiden Richtungen, d.h. längs und quer, die erwünschte äusserst hohe Zugfestigkeit.

Auch die GB-A-917 903 beschreibt biaxial orientierte Filme aus Polypropylen, welche in der Filmebene eine Vorzugsorientierung in Längsrichtung aufweisen, wobei bei einem Beispiel eine Zugfestigkeit in Längsrichtung von über 300 N/mm² erreicht wird. Aber auch dabei ist die Zugfestigkeit in Querrichtung noch nicht zufriedenstellend.

Es stellte sich somit die Aufgabe, eine biaxial gestreckte Polypropylenfolie sowie ein Verfahren zu deren Herstellung zu entwickeln, die sowohl in Längs- als auch in Querrichtung eine äusserst hohe Zugfestigkeit aufweist. Eine weitere Aufgabenstellung lag darin, Abrisse bei der Nachlängsverstreckung zu vermeiden.

Gelöst wird die vorstehend genannte Aufgabe durch die im Anspruch 1 beschriebene Folie und das im Anspruch 4 beschriebene Verfahren.

Das Wesentliche des Verfahrens besteht darin, dass man die OPP-Folie mit hoher Molekülorientierung in Querrichtung so in Längsrichtung nachstreckt, dass der Breiteneinsprung (Film width reduction ratio) der Folie kleiner als 20%, bevorzugt kleiner als 10% ist. Wenn man nämlich die OPP-Folie mit einem Doppelbrechungswert zwischen 0,010 und 0,030, bevorzugt zwischen 0,015 und 0,025, um das 1,8fache bis 3fache ihrer ursprünglichen Länge in Längsrichtung nachstreckt und man den Breiteneinsprung der Folie unter 20%, bevorzugt unter 10%, hält, erhält man eine Polypropylenfolie, die nach beiden Richtungen eine hohe Zugfestigkeit aufweist. (Der Doppelbrechungswert ist hier definiert als die Differenz zwischen dem Brechungsindex in Längs- und dem in Querrichtung).

Ein gewisser Nachteil bei diesem Nachstreckverfahren liegt jedoch darin, dass die Folie während des Nachstreckens gelegentlich abreisst. Dies lässt sich kaum vermeiden, da die Nachstreckung unter sehr harten Bedingungen durchgeführt wird, d.h. es ist äusserst schwierig, die OPP-Folie mit hoher Molekülorientierung in Querrichtung (woraus Sprödigkeit in Längsrichtung folgt) nachzustrecken, und die Einschränkungen hinsichtlich des Breiteneinsprungs der Folie einzuhalten. Das Abreissen der Folie behindert die Wirtschaftlichkeit der Folienproduktion, da sich die abgerissene Folie oft in den Walzen verfängt, was zu längeren Maschinenstillstandszeiten führt.

Im Fall der vorliegenden Erfindung ist unter Netzmittel ein Stoff mit oberflächenaktiven Eigenschaften zu verstehen. Für die Erfindung werden ampholytische oder nicht-ionische Netzmittel bevorzugt, die bei Raumtemperatur als feste oder pastöse Massen vorliegen, d.h. es werden erfindungsgemäss solche ampholytischen oder nicht-ionische Netzmittel bevorzugt, deren Schmelzpunkt höher als etwa 20°C liegt. Einige Beispiele sind im folgenden ausgeführt:

1. Ampholytische Netzmittel
Mononatriumsalz des Hydroxyethyldicarboxymethylalkylbetain;
N,N-bis-(2-hydroxyethyl)-alkoxy-propylbetain;
Calciumsalz des N-(2-hydroxyalkyl)-N,N-di-(polyoxyethylen)-N-carboxymethylammonium-betain.

2. Nicht-ionische Netzmittel
Höherer Fettsäureester von Glycerin;
N,N-bis-(2-hydroxyethyl)-alkylamin (einschliesslich der Ethylenoxid enthaltenden Art);
Kondensationsprodukte von Fettsäure(n) mit Diethanolamin(en).

Neben einem einzelnen Netzmittel können auch Gemische aus mehreren Netzmitteln verwendet werden. Der Netzmittelgehalt der OPP-Folie beträgt 0,1 bis 1,0 Gew.-%, bevorzugt jedoch 0,2 bis 0,8 Gew.-%, bezogen auf das Filmgewicht. Wenn mehr als zwei Netzmittel verwendet werden, muss der Gesamtanteil jedes einzelnen Netzmittels innerhalb des oben angegebenen Bereiches liegen. Liegt der Anteil unter 0,1%, ist die Verbesserung, die im Hinblick auf eine Reduzierung der Anzahl der Folienabrisse während des Nachstreckens angestrebt wird, nur unerheblich. Liegt dieser Anteil dagegen über 1%, wird die Trübung der Folie zu gross für eine universelle Verwendbarkeit. In der Regel sollte die Trübung bei universell verwendbaren Folien geringer als 25%, bevorzugt geringer als 20% sein.

Erfindungsgemäss werden solche Stoffe als Kristallisationskeimbildner verwendet, durch deren Hinzugabe die Schmelzkristallisationsrate von Polypropylen gefördert wird. Einige Beispiele sind nachstehend aufgeführt:

Organische Stoffe
Metallsalze der Benzoesäure (das Metall kann Natrium, Kalium, Aluminium, Lithium usw. sein)
Metallsalz der Cyclohexylkohlensäure
Metallsalze von Adipinsäure oder Sebacinsäure

Anorganische Stoffe
Talcum
Siliziumdioxid, einschliesslich wasserhaltiger Formen
Kaolinit
Zeolith
Magnesiumoxid
Titandioxid
Ton

Aluminiumoxid
Calciumoxid
Diatomeenerde
Calciumcarbonat
Magnesiumcarbonat
Bentonit

Alle anorganischen Stoffe sollten pulverförmig vorliegen.

Mit Hilfe des DSC oder eines Dilatometers kann leicht geprüft werden, ob der betreffende Stoff eine die Kristallisationsrate fördernde Wirkung hat oder nicht. Der gebräuchliche Parameter für die Kristallisationsrate ist die halbe Kristallisationszeit, die definiert ist als die Zeit, die zur Erreichung der Hälfte des gesamten Kristallisationsgrades nötig ist. Die Hälfte der Kristallisationszeit wird in der Regel unter isothermen Kristallisationsbedingungen bei 125°C ermittelt. Wird durch Hinzufügen eines Stoffes zu Polypropylen die Hälfte der Kristallisationszeit verkürzt, gilt dieser Stoff als Kristallisationskeimbildner.

Erfindungsgemäss kann ein einzelner Kristallisationskeimbildner oder ein Gemisch aus solchen Mitteln verwendet werden. Der Anteil an Kristallisationskeimbildnern soll zwischen 0,01 und 0,5 Gew.-%, bevorzugt jedoch zwischen 0,05 und 0,3 Gew.-%, liegen. Werden mehr als zwei Kristallisationskeimbildner verwendet, soll ihr Gesamtanteil innerhalb des oben angegebenen Bereiches liegen. Ist dieser Anteil kleiner als 0,01%, wird die Wirksamkeit dieser Erfindung hinsichtlich der Reduzierung der Anzahl der Folienabrisse während des Streckens sehr gering. Falls anderseits der Anteil grösser als 0,5% ist, treten unerwünschte Wirkungen auf wie eine Zunahme der Trübung und/oder eine Zunahme der Abrisse während des Nachstreckens.

Wenn ein anorganischer Kristallisationskeimbildner verwendet wird, soll dieser in feinteiliger Form vorliegen, wobei die durchschnittliche Teilchengrösse zwischen 0,01 und 3,00 µm, bevorzugt zwischen 0,05 und 2,00 µm, liegen soll. Wenn die Partikel kleiner sind, kommt es zu Schwankungen in der Folientrübung. Falls die Partikel anderseits grösser sind als oben angegeben, erfolgt keine Reduzierung der Anzahl der Abrisse während des Nachstreckens mehr, und z.T. wird durch grössere Partikel die Anzahl der Abrisse sogar noch erhöht.

Überraschenderweise nimmt die Anzahl der Folienabrisse während des Nachstreckens weiter ab, wenn sowohl Netzmittel als auch Kristallisationskeimbildner vorhanden sind. Die gleichzeitige Anwesenheit von beiden Mitteln ist dem Vorhandensein von entweder nur Netzmitteln oder nur Kristallisationskeimbildnern weitaus überlegen. Mit anderen Worten, die Anzahl der Folienabrisse während des Streckens wird durch die synergistische Wirkungsweise von Netzmitteln und Kristallisationskeimbildnern verringert.

Im folgenden werden Messverfahren für einige Eigenschaften, die in den nachfolgenden Beispielen untersucht wurden, zusammenfassend dargestellt:

1. Zugfestigkeit:
Nach dem Verfahren gemäss JIS C2318-1972.
2. Brechungsindex:
Mit Abbé-Refraktometer mit Natriumlampe als Lichtquelle.
3. Breiteneinsprung:
Berechnung mit Hilfe der folgenden Gleichung:

$$\text{Breiteneinsprung} = \frac{W-W'}{W} \times 100 \ (\%)$$

wobei
W = Breite der OPP-Folie vor dem Nachstrecken, und
W' = Breite der OPP-Folie nach dem Nachstrecken ist.
4. Trübung:
Nach dem Verfahren gemäss ASTM-D 1003-52 unter Verwendung von 8fach übereinander gelegter Folie
5. Häufigkeit der Folienabrisse:
Sie wird ausgedrückt durch die Anzahl der Folienabrisse, die während des Nachstreckens im 24stündigen Dauerbetrieb (1 Tag) auftreten. Das Streckverhältnis beträgt dabei das 2fache, und das Breitenreduktionsverhältnis der Folie liegt im Bereich von 6 bis 8%.

Beispiele 1 bis 6
Sechs OPP-Folien, die verschieden grosse Anteile an Netzmitteln und Kristallisationskeimbildnern enthielten, wurden hergestellt. Alle Folien hatten eine Dicke von 40 µm und den Doppelbrechungswert 0,022. Diese Folien wurden in Längsrichtung auf das 2fache ihrer ursprünglichen Länge nachgestreckt bei einer Temperatur von ca. 155°C. Der Breiteneinsprung der Folie während des Nachstreckens wurde im Bereich von 7 bis 8% gehalten. Die Häufigkeit der Folienabrisse und die Folientrübung sind in der folgenden Tabelle zusammenfassend dargestellt.

Aus dieser Tabelle geht klar die synergistische Wirkung von Netzmittel und Kristallisationskeimbildner hervor, durch die die Anzahl der Folienabrisse während des Nachstreckens verringert wird.

Herstellung einer erfindungsgemässen Folie
Isotaktisches Polypropylenpulver mit einem Schmelzindex von 0,2 g/10 min (Messung bei 230°C und 2 kp/cm² Belastung), einem isotaktischen Anteil von 97,9% und einer Schmelzkristallisationstemperatur von 110,5°C wurde mit den folgenden Komponenten gemischt und dann bei 240°C zu Pellets schmelzextrudiert.
- 0,05% Irganox ® 1010 (Herst.: Ciba-Geigy)
- 0,20% BHT Swanox ® (Herst.: Yoshitomi Seiyaku)
phenolische
Stabilisatoren
- 0,60% Mononatriumsalz von Hydroxyethyldicarboxymethylstearylbetain (Netzmittel)
- 0,10% Zeolithpulver mit einer durchschnittlichen Partikelgrösse von 1,0 µm (Kristallisationskeimbildner)

| Versuch Nr. | * Gehalt an Netzmittel (in Gew.-%) | ** Gehalt an Kristallisationskeimbildner (in Gew.-%) | Häufigkeit der Folienabrisse (Anz./Tag) | Trübung der nachgestreckten Folie (in %) |
|---|---|---|---|---|
| 1 | 0 | 0 | 8 | 13,2 |
| 2 | 0,35 | 0 | 5 | 14,8 |
| 3 | 0 | 0,12 | 6 | 16,7 |
| 4 (erfindungsgemäss) | 0,35 | 0,12 | 0 | 17,5 |
| 5 | 1,20 | 0,12 | 0 | 31,0 |
| 6 | 0,35 | 0,60 | 3 | 42,8 |

\* Monoglycerid der Stearinsäure
\*\* Talcumpulver mit einer durchschnittlichen Teilchengrösse von 0,8 µm.

Die Pellets wurden in den Extruder gegeben und bei 250 °C durch eine T-Düse zu einem Film schmelzextrudiert, der dann durch Kontakt mit einer Kühltrommel, die eine Oberflächentemperatur von 30 °C hatte, abgekühlt und gehärtet wurde, wobei eine nichtorientierte Folie mit einer Dicke von 2 mm entstand. Diese Vorfolie wurde auf 145 °C vorgewärmt und dann nach Schnellerhitzen mit einem Infrarotstrahler in Längsrichtung auf das 5fache ihrer ursprünglichen Länge gestreckt. Die in Längsrichtung gestreckte Folie wurde dann in einen Spannrahmen eingeführt, auf 160 °C erwärmt, in Querrichtung um das 11fache ihrer ursprünglichen Breite gestreckt und bei 160 °C thermofixiert, wobei in Querrichtung eine Relaxation von 8% zugelassen wurde und anschliessend abgekühlt. Die OPP-Folie besass eine Dicke von 40 µm. Die OPP-Folie hatte in Querrichtung einen Brechungsindex von 1,5200, in Längsrichtung betrug der Brechungsindex 1,4998, und der Doppelbrechungswert war 0,0202. Die OPP-Folie enthielt 0,40% des Betainnetzmittels und 0,10% Zeolithpulver, d.h. 0,2% des Netzmittels dampften während des Streckvorganges ab. Die Folie, die aus dem Spannrahmen kam, hatte an beiden Seiten dicke Ränder, nämlich dort, wo sie im Spannrahmen von Kluppen gehalten war. Diese dicken Ränder werden allgemein als «Kanten» bezeichnet. Die Kante einer Seite war 7 cm breit und ca. 600 µm dick. Diese OPP-Folie mit Kanten wurde mit Hilfe eines Infrarot-Schnellheizstrahlers auf etwa 150 °C erhitzt und um das 2fache ihrer ursprünglichen Länge nachgestreckt, und zwar zwischen zwei Paar angetriebener Walzen mit verschiedenen Umdrehungsgeschwindigkeiten. Während des Nachstreckens betrug der Breiteneinsprung der Folie nur 6%, da die beiden Kanten eine Breitenreduktion der Folie verhinderten. Die gestreckte Folie wurde dann auf den Walzen bei 145 °C während 2 s thermofixiert, wobei eine Relaxation von 4% in Längsrichtung erlaubt war, auf Zimmertemperatur abgekühlt und nach dem Abschneiden der beiden Kanten aufgewickelt. Während eines 24stündigen Dauerstreckens kam es zu keinem Folienabriss. Die erhaltene Folie hatte eine Dicke von 20 µm, die Zugfestigkeit in Längsrichtung betrug 326 N/mm², die Zugfestigkeit in Querrichtung 244 N/mm², d.h. die Folie war nach beiden Richtungen sehr widerstandsfähig.

Die Trübung der Folie betrug 16,2%, die Transparenz war also gut.

**Patentansprüche**

1. Biaxial gestreckte und in Längsrichtung nachverstreckte Polypropylenfolie, die eine Zugfestigkeit von grösser als 300 N/mm² in Längsrichtung besitzt, dadurch gekennzeichnet, dass die Folie eine Zugfestigkeit von grösser als 200 N/mm² in Querrichtung aufweist und insgesamt 0,1 bis 1,0 Gew.-% eines oder mehrerer Netzmittel und 0,01 bis 0,5 Gew.-% eines oder mehrerer Kristallisationskeimbildner enthält.

2. Folie nach Anspruch 1, dadurch gekennzeichnet, dass sie ampholitische oder nichtionische Netzmittel enthält, deren Schmelzpunkt höher als etwa 20 °C liegt.

3. Folie nach einem der Ansprüche 1 oder 2, dadurch gekennzeichnet, dass sie eine Trübung <25% aufweist.

4. Verfahren zur Herstellung einer Folie nach einem der Ansprüche 1 bis 3, wobei man im Anschluss an einen Längs-Quer-Flachstreckprozess eine Nachverstreckung in Längsrichtung ausführt, dadurch gekennzeichnet, dass man eine längsquergestreckte Polypropylenfolie mit einem Doppelbrechungswert zwischen 0,010 und 0,030, die wenigstens ein Netzmittel im Bereich von 0,1 bis 1,0 Gew.-% und wenigstens einen Kristallisationskeimbildner im Bereich von 0,01 bis 0,5 Gew.-% enthält, um das 1,8 bis 3fache ihrer ursprünglichen Länge nachstreckt und dabei den Breiteneinsprung unter 20% hält.

5. Verfahren nach Anspruch 4, dadurch gekennzeichnet, dass man eine Folie mit einem Doppelbrechungswert zwischen 0,015 und 0,025 nachstreckt.

6. Verfahren nach Anspruch 4 oder 5, dadurch gekennzeichnet, dass man den Breiteneinsprung unter 10% hält.

7. Verfahren nach einem der Ansprüche 4 bis 6, dadurch gekennzeichnet, dass man nach der Nachlängsstreckung eine Thermofixierung durchführt.

8. Verfahren nach Anspruch 7, dadurch gekennzeichnet, dass man die Thermofixierung unter Zulassung einer Relaxation in Längsrichtung durchführt.

## Claims

1. Biaxially oriented polypropylene film restretched in the longitudinal direction, which has a tensile strength of more than 300 N/mm² in the longitudinal direction, whereby the film has a tensile strength of more than 200 N/mm² in the transverse direction and contains a total amount of 0.1 to 1.0 percent by weight of one or several surfactants and 0.01 to 0.5 percent by weight of one or several nucleating agents.

2. Film as claimed in Claim 1, wherein ampholytic or non-ionic surfactants having a melting point of more than about 20 °C are contained.

3. Film as claimed in any of Claims 1 or 2, which exhibits a haze of less than 25%.

4. Process for the production of a film as claimed in any of Claims 1 to 3, in which planar stretching in the longitudinal and transverse directions is followed by restretching in the longitudinal direction, whereby a polypropylene film stretched in the longitudinal and transverse directions, which has a birefringence value of between 0.010 and 0.030 and contains at least one surfactant in an amount of between 0.1 to 1.0 percent by weight and at least one nucleating agent in an amount of between 0.01 and 0.5 percent by weight, is restretched by 1.8 to 3 times its original length, whereby the width reduction ratio is kept below 20%.

5. Process as claimed in Claim 4, wherein a film having a birefringence value of between 0.015 and 0.025 is restretched.

6. Process as claimed in Claim 4 or 5, wherein the width reduction ratio is kept below 10%.

7. Process as claimed in any of Claims 4 to 6, wherein restretching is followed by thermosetting.

8. Process as claimed in Claim 7, wherein a relaxation in the longitudinal direction is permitted during thermosetting.

## Revendications

1. Feuille de polypropylène étirée biaxialement et étirée ultérieurement en direction longitudinale, qui possède une résistance à la traction supérieure à 300 N/mm² en direction longitudinale, caractérisée en ce que la feuille a une résistance à la traction supérieure à 200 N/mm² en direction transversale et contient au total de 0,1 à 1,0% en poids d'un ou de plusieurs agents mouillants et de 0,01 à 0,5% en poids d'un ou de plusieurs formateurs de germes de cristallisation.

2. Feuille selon la revendication 1, caractérisée en ce qu'elle contient des agents mouillants ampholytes ou nonioniques dont le point de fusion est supérieur à 20 °C environ.

3. Feuille selon l'une des revendications 1 ou 2, caractérisée en ce qu'elle présente un trouble inférieur à 25%.

4. Procédé de fabrication d'une feuille selon l'une quelconque des revendications 1 à 3, dans lequel on effectue, après un processus d'étirage biaxial à plat, un étirage ultérieure en direction longitudinale, caractérisé en ce qu'on étire ultérieurement, de 1,8 à 3 fois sa longueur initiale, une feuille de polypropylène étirée dans le sens longitudinal et transversal avec un indice différentiel de réfraction compris entre 0,010 et 0,030, qui contient au moins un agent mouillant dans une gamme de 0,01 à 0,5% en poids, et on maintient la réduction de largeur en-dessous de 20%.

5. Procédé selon la revendication 4, caractérisé en ce qu'on étire ultérieurement une feuille avec un indice différentiel de réfraction compris entre 0,015 et 0,025.

6. Procédé selon la revendication 4 ou 5, caractérisé en ce qu'on maintient la réduction de largeur en-dessous de 10%.

7. Procédé selon l'une quelconque des revendications 4 à 6, caractérisé en ce que l'étirage longitudinal ultérieur est suivi d'une fixation à la chaleur.

8. Procédé selon la revendication 7, caractérisé en ce qu'on effectue la fixation à la chaleur en permettant une relaxation en direction longitudinale.